# EUROPEAN PATENT APPLICATION

(11) **EP 4 629 193 A1**
(43) Date of publication of application: **08.10.2025**
(21) Application number: 25164796.2
(22) Date of filing: 19.03.2025
(51) Int. Cl.: G06V 20/20

(54) **PHOTOGRAPHIC BASED INTERFACE FOR ACCESSING LOCATION BASED ENGINEERING INFORMATION**

(30) Priority: 04.04.2024 US 202418627384
(71) Applicant: The Boeing Company, Arlington, VA 22202 (US)
(72) Inventor: SCOTT, Jeremiah K., Arlington, 22202 (US); BAKER, Robert Stephen Kanematsu, Arlington, 22202 (US); BERETTA, Bryan J., Arlington, 22202 (US); BERNARDONI, Michael L., Arlington, 22202 (US)
(74) Representative: Bugnion S.p.A. - US1

(57) **Abstract**

The present disclosure provides techniques for spatial mapping. A photographic recording depicting a component is generated. Primary coordinate data for the component is extracted by analyzing one or more technical documents. The primary coordinate data is integrated into the photographic recording, where a reference plane is defined within the photographic recording based on the primary coordinate data, one or more sub-components within the defined reference plane are identified, and secondary coordinate data for each of the one or more sub-components is generated.

## Description

### FIELD

Aspects of the present disclosure relate to spatial data mapping, and, more specifically, to creating photographic-based interfaces that display accurate spatial data for analyzing structures with defined coordinate systems.

### BACKGROUND

Conventionally, identifying non-conformance locations in vehicle components involves consulting a wide range of technical resources, including detailed engineering drawings, installation plans, and three-dimensional models, among others. Determining the precise location of a specific instrument using these documents not only requires substantial technical knowledge, but it also presents other challenges. For example, it demands extensive cross-referencing and correlation of various data sources, which are time-consuming and increase the possibility of human error. Additionally, locating the exact position of an instrument based on these documents often requires the use of specialized computing tools and skills. These requirements further complicate the process, making location identification more challenging, especially in situations requiring quick and accurate decision-making, such as quality inspection or maintenance activities. Given these limitations, there is an increasing need for a solution that simplifies the process of gathering coordinate information and other vehicle-related data for various processes. Such a method would significantly streamline the quality inspection or maintenance process, making coordinate information more accessible, especially for those with less technical knowledge.

### SUMMARY

The present disclosure provides a method in one aspect, the method including, generating a photographic recording depicting a component within a vehicle, extracting primary coordinate data for the component by analyzing multi-dimensional modeling data, and integrating the primary coordinate data into the photographic recording, where integrating the primary coordinate data into the photographic recording includes defining a reference plane within the photographic recording based on the primary coordinate data, identifying one or more sub-components within the defined reference plane, and generating secondary coordinate data for each of the one or more sub-components.

Other aspects of this disclosure provide one or more non-transitory computer-readable media containing, in any combination, computer program code that, when executed by the operation of a computer system, performs operations in accordance with one or more of the above methods, as well as systems comprising one or more computer processors and one or more memories containing one or more programs, which, when executed by the one or more computer processors, perform operations in accordance with one or more of the above methods.

### BRIEF DESCRIPTION OF THE DRAWINGS

So that the manner in which the above recited features can be understood in detail, a more particular description, briefly summarized above, may be had by reference to example aspects, some of which are illustrated in the appended drawings.
Figure 1 depicts an example coordinate data mapping system, according to some aspects of the present disclosure.
Figure 2 depicts an example of Polygon Coordinate Interface (PCI), according to some aspects of the present disclosure.
Figure 3 depicts an example of End User Interface (EUI), according to some aspects of the present disclosure.
Figure 4 depicts an example method for updating photographic recordings with extracted spatial data, according to some aspects of the present disclosure.
Figure 5 depicts an example method for integrating spatial data into photographic recordings and identifying component positions, according to some aspects of the present disclosure.
Figure 6 is a flow diagram depicting an example method for coordinate data extraction and integration, according to some aspects of the present disclosure.

### DETAILED DESCRIPTION

The present disclosure provides a system that integrates coordinate information from technical data sources into a photographic image of a vehicle assembly. The integration enables users to interact with the image and receive accurate coordinate data for any selected point. Through the system, users can locate and understand the position of a specific component on the vehicle more efficiently and accurately. The quick availability of coordinate data is highly beneficial for operations that benefit from rapid identification of regions of interest within a vehicle, such as vehicle inspection and maintenance activity. The method described in the present disclosure improves the efficiency of these operations by making coordinate data more accessible to a broader range of users, regardless of their technical expertise. The enhancement in accessibility streamlines various operational activities, and ensures precision and speed in identifying and assessing vehicle components.

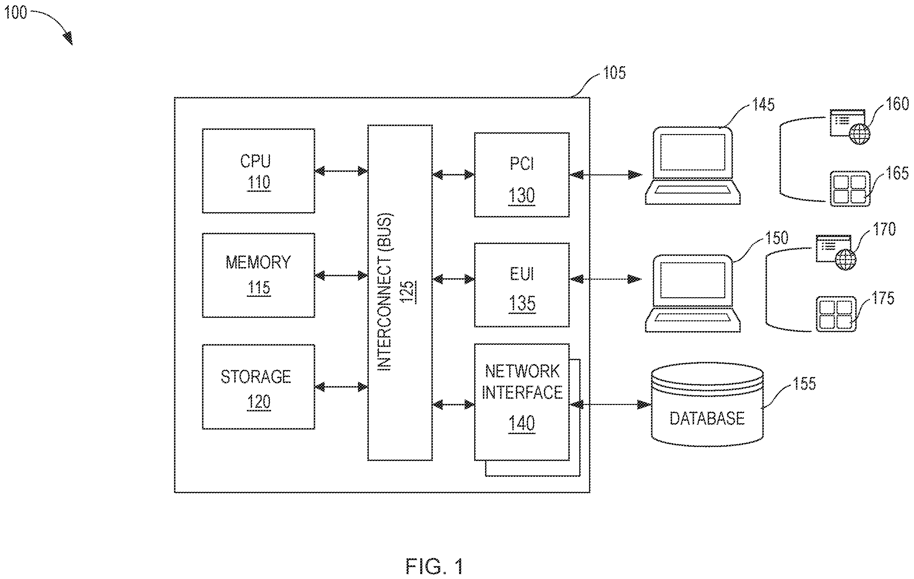

Figure 1 depicts an example coordinate data mapping system 100, according to some aspects of the present disclosure.

As illustrated, the coordinate mapping system 100 includes three components, including a database 155, a backend server 105, an administrator device 145, and an end-user device 150. The backend server 105 includes a CPU 110, memory 115, storage 120, and one or more network interfaces 140, all connected through an interconnect bus 125. The backend server 105 further includes two distinct I/O interfaces: the Polygon Coordinate Interface (PCI) 130 and the End User Interface (EUI) 135. The two interfaces are accessed via different devices, with the PCI 130 accessed by an administrator or system developer through the device 145, and the EUI 135 accessed by an end user through the device 150.

In the illustrated example, the database 155 communicates with the backend server 105 via a network interface 140, and stores the necessary data for the server's operations. In some aspects, the database 155 may store a variety of technical documents and data from which the server 105 can extract coordinate information. In some aspects, the coordinate information may refer to the coordinates of a data point that define the location of an object or component in a three-dimensional (3D) space relative to a reference system (e.g., a vehicle's local coordinate system). In some aspects, the coordinates of a data point may be represented by different systems, such as a Cartesian coordinate system or an aviation station coordinate system. The Cartesian coordinate system includes the X, Y and Z axes to specify a point in the 3D space. The aviation station coordinate system, specifically involving STA (station), WL (water line), and BL (buttock line) axes, is primarily designed for aircraft. In this system, STA represents the longitudinal position of a point along the length of an aircraft, WL indicates the vertical position of the point along the height of the aircraft, and BL represents lateral position of the point relative to the aircraft's centerline. In some aspects, these technical documents may include, but are not limited to, multi-dimensional models (e.g., 3D models), detailed engineering drawings (that provide dimensions and/or specifications for various parts within a vehicle), and installation instructions and diagrams. In some aspects, the multi-dimensional models may include full 3D models of the entire vehicle for overarching structure. In some aspects, the multi-dimensional models may include detailed 3D models for specific areas or assemblies within or outside of the vehicle, such as the flight control deck, passenger seat, landing gear, aircraft engine, and the like.

In some aspects, the database 155 may store high-resolution images that display specific assemblies or components within or outside of the vehicle. These may include two-dimensional (2D) images and/or stitched images (e.g., forming a 180 degree or 360 degree panoramas) for a more comprehensive view. In some aspects, the database 155 may include additional reference materials that provide context for the multi-dimensional models and drawings, such as part numbers, material specifications, and manufacturing data. In some aspects, the aforementioned data may be saved in the local storage 120 of the backend server 105, as opposed to the remote database 155. Such configurations may allow faster data retrieval and processing, and/or reduce dependence on network connectivity for some time-sensitive operations.

In some aspects, the backend server 105 may be configured to generate a detailed visual representation (also referred to in some aspects as photographic recording) of a vehicle's interior or exterior using 2D images and/or stitched images (saved in the database 155). The photographic recording may capture one or more assemblies or components (e.g., a flight control deck with multiple control panels and/or display units), within or outside of the vehicle, in 2D format, and from the specific viewpoints at which the camera(s) were positioned. The original photographic recording does not include specific coordinate information for the components it shows, such as X, Y, and Z coordinates and other positional data.

In some aspects, following the generation of the photographic recording, the backend server 105 may be configured to retrieve technical documents from the database 155 related to the assemblies or components (e.g., the flight control deck) depicted in the recording. The technical documents may include a variety of materials, such as multi-dimensional models, engineering drawings, installation guidelines and diagrams, and other reference materials. The materials may either illustrate the broader environment in which the assembly is located, or concentrate specifically on the assembly of interest. For example, assuming the photographic recording depicts a flight control deck within an airplane's cockpit, the technical documents retrieved may include various forms of 3D models, engineering drawings, and/or installation blueprints. Some of these materials may depict the overall cockpit to provide a complete visual representation in which the flight control deck is situated, and/or its relation to other components (e.g., windows, control wheels, pilot seats) in the cockpit. Others may be more focused, such as detailed 3D models that specifically target the control panel itself. These focused materials may provide details of the flight control deck, such as the number of panels or display units it contains, each panel's size, shape, and position, and/or the sub-components (e.g., buttons, switches, or displays) within each panel and their corresponding dimensions.

In some aspects, after retrieving technical documents from the database 155, the backend server 105 may analyze the documents to determine the coordinate data for each depicted assembly or component. For example, for a 3D model that depicts a flight control deck with multiple control panels or display units, the server 105 may identify the coordinates (e.g., X, Y, Z; or STA, BL, WL) of different control panels within the model(s). In addition, the server 105 may use image recognition technologies to interpret the models, drawings, or guidelines to understand the position of each control panel relative to other cockpit features (e.g., windows, control wheels, pilot seats), and extract the dimension data that indicate the size and shape of each control panel within the flight control deck.

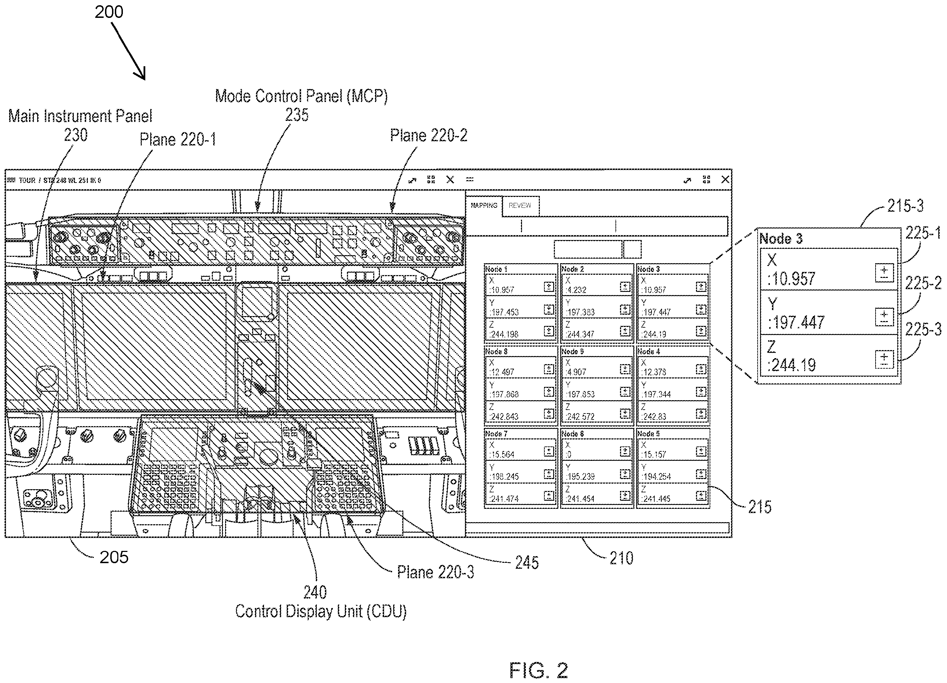

In some aspects, the server 105 may integrate the spatial data (e.g., the coordinates of each control panel) into the photographic recording. This may involve defining geometric planes (also referred to in some aspects as polygon planes) within the photographic recording for each depicted assembly or component. If the assembly comprises multiple sections (e.g., a flight control deck with multiple control panels or display units), each different in orientation, angle, or shape, separate planes may be established for each section. Each geographic plane may be defined by a number of points (e.g., up to and including nine points), using the coordinates obtained from the technical documents (e.g., 3D models). In aspects where the photographic recording depicts a rectangular control panel (e.g., 230 of Figure 2), the server 105 may extract the coordinates of four points that define the corners of the panel from the 3D model. These four points effectively outline the shape, size, and orientation of the panel in 3D space. The server 105 then uses the mapped points and their coordinates to draw a virtual plane (e.g., 220-1 of Figure 2) within the recording. The plane (e.g., 220-1 of Figure 2) acts as a reference for the control panel's (e.g., 230 of Figure 2) location and orientation in the 2D image.

In some aspects, the integration process may be performed manually by a developer through the PCI 130. The developer may manually compare the 3D models or technical drawings with the photographic recording, to ensure the extracted coordinate data corresponds to the assembly depicted within the photographic recordings. The developer may then input the coordinates of points into the system to construct the plane(s).

In some aspects, once the plane(s) are established, the server 105 may perform a validation process. This may involve cross-referencing the established plane(s) (e.g., 220-1 of Figure 2) with the actual image of the assembly (e.g., 230 of Figure 2) in the recording. During the process, the server 105 may check for misalignments and/or discrepancies in size, shape, and/or position between the defined planes and the physical appearance of the assembly depicted in the recording. The validation seeks to confirm that the boundaries and proportions of the polygonal planes correctly align with the assembly's edges, corners, and overall geometry, as shown in the photographic recording. Any inconsistencies identified during the validation process may be flagged for manual review through the PCI 130 to maintain the accuracy of the spatial data mapping.

In some aspects, after the establishment of the polygon plane(s), the server 105 may proceed to determine the coordinates of other points within the plane(s). During the process, the server 105 may use the coordinates of the initial points (e.g., the four corner points of a rectangular plane) as references. The server 105 may then utilize geometric principles to map out the internal area of the plane, and create a sub-coordinate system (with X and Y axes) that covers the entire surface area of the assembly (e.g., 230 of Figure 2). The sub-coordinate system may then be used to identify points that represent sub-components, such as buttons, switches, and displays within the assembly (e.g., 245 of Figure 2), and determine their relative positions to the reference points. Following that, the 3D coordinates (e.g., X, Y, Z; or STA, WL, BL) of these sub-components may be determined based on the reference coordinates of the initial points. In some aspects, the additional coordinate data may be overlaid onto the 2D photographic recording. The enhanced recording may then be made available to end users through the EUI 135. By utilizing the enhanced recordings, users (e.g., inspectors or maintenance personnel) can quickly identify the precise location (e.g., 3D coordinates) of an assembly or its individual sub-components with a single click.

In some aspects, the coordinate data (e.g., X, Y, Z; or STA, WL, BL) extracted from models or drawings, as well as the initial photographic recordings and the enhanced recordings with spatial data overlay, may be saved in the database 155 for further reference and use.

In some aspects, the PCI 130 may be designed as a web-based platform, accessible through a web browser 160, or part of an application 165 installed on the administrator device 145. Through the PCI 130, developers (or administrators) may manually align photographic recordings with existing 3D models or technical drawings. The alignment process confirms that the coordinates extracted from the models or drawings correspond accurately to the assemblies or components depicted in the recording. In some aspects, developers may use the PCI 130 to input the coordinates of identified reference points (e.g., the four corners of a rectangular control panel) into the system, to construct geometric planes that represent the physical layout of the assembly in the photographic recording. In some aspects, the PCI 130 may provide tools for validating the accuracy of the constructed planes and/or for making necessary adjustments.

In some aspects, the EUI 135 may be configured as a web-based interface for ease of access through a web browser 170. In some aspects, the EUI 135 may be application-based, accessible through an application 175 within the end-user device 150. In some aspects, the EUI may provide users with access to enhanced photographic recordings. These enhanced recordings include overlaying coordinates, geometric planes, and markers that accurately indicate the precise location of each depicted assembly or component. In some aspects, users may interact with these displayed recordings through the EUI 135, such as by clicking on a component within the image to view detailed information of the component, such as its 3D coordinates. For example, when the recording depicts a control panel (e.g., 230 of Figure 2) within a flight control deck, users may click on buttons, switches, displays, or other components (e.g., 245 of Figure 2) within the control panel. In response, the EUI 135 may reveal specific details about these components, such as their exact 3D coordinates (e.g., X, Y, Z; or STA, WL, BL) relative to the aircraft, their dimensions, part numbers, and other relevant information.

Figure 2 depicts an example of Polygon Coordinate Interface (PCI) 200, according to some aspects of the present disclosure.

The illustrated figure shows a web-based PCI 200. The web-based PCI comprises two main windows: a photographic recording window 205 on the left, and a coordinate entry window 210 on the right. The photographic recording window 205 displays a photographic recording (e.g., a 360-degree or 180-degree stitched image, a single two-dimensional image) for a vehicle (e.g., an aircraft). In some aspects, the photographic recording shows a specific area within or outside of the vehicle (e.g., the cockpit within the aircraft), and/or captures one or more assemblies within that are. For example, the photographic recording depicted in Figure 2 shows a flight control deck that includes several control panels and/or display units, such as the control display unit (CDU) 240, the main instrument panel 230, and the model control panel (MCP) 235. As illustrated, each panel or display unit includes several sub-components. For example, the main instrument panel 230 includes several screens that displays important flight information, such as altitude, attitude, airspeed, vertical speed, and navigation information. The main instrument panel 230 also includes several keys or switches 245 in the middle that interact with different display options or settings within the main instrument panel 230.

For each control panel (e.g., 230, 235, 240), one or more geometric planes are constructed within the photographic recording to define its boundaries and surface area. The main instrument panel 230 and the CDU 240, which have a standard rectangular shape, can have their planes 220-1 and 220-3 constructed once the coordinates of the four corners (each corner having an X, Y, and Z position in 3D space) are determined. For the MCP 235 that has a more complex shape, a polygonal plane 220-2 is defined. Unlike a rectangle, a polygon can have more than four sides, and thus more than four reference points may be used to define its shape. As illustrated, in the coordinate entry window 210, up to nine reference points 215 can be used to define a polygonal plane that matches the MCP's actual shape in the recording.

As discussed above, the coordinates of reference points 215 can be determined by analyzing a variety of technical documents and drawings (e.g., 3D models of the cockpit, engineering drawings of the flight control deck). In some aspects, these coordinates may be automatically input into the system to construct the planes. In some aspects, developers may manually input the 3D coordinates of each point using the coordinate entry window 210. The manual process involves a more interactive approach where developers may select or click on points (e.g., pixels) within the photographic recording to create nodes 215 (also referred to in some aspects as reference points). These nodes (or reference points) 215, 215-3 may then be labeled with the corresponding coordinates (from the 3D models or engineering drawings) representing that specific point. For example, to construct the plane 220-1 for the main instrument panel 230 that has a standard rectangular shape, the developer may begin by selecting four corner points (or pixels) in the image. The developer may label each of these points with the corresponding X-coordinate 225-1, Y-coordinate 225-2, and Z- coordinate 225-3, or the equivalent in the aviation station coordinate system (like STA, WL, and BL coordinates), based on the extracted data. For a component that does not have a standard shape, such as the MCP 235, the developer may select up to nine points (or pixels) to accurately outline the component's boundary. Each of these points may then be assigned the appropriate X, Y and Z coordinates (from 3D models) to create a polygon plan (e.g., 220-2) that precisely map the irregular shape of the component within the recording.

Although the illustrated PCI 200 depicts the use of up to nine reference points 210 for defining a polygonal plane, it is provided for conceptual clarity. In some embodiments, any number of reference points (not limited to nine) may be utilized to define the polygonal plane of a component or assembly.

Once the plane for each panel is established, such as the plane 220-1 for the main instrument panel 230, the plane 220-2 for the MCP 235, and the plane 220-3 for the CDU 240, the relative positions of sub-components (e.g., switches, buttons, keys, screens) within each panel can be identified. In some aspects, a sub-coordinate system covering the entire surface of the plane is generated, which enables the determination of each sub-component's position relative to the reference points. Following that, the 3D coordinates (e.g., X, Y, Z; or STA, WL, BL) of each sub-component, such as the switch 245 on the main instrument panel 230, may be determined based on the known 3D coordinates of the reference points 215. The coordinate data for each panel and its sub-components may then be overlaid onto the photographic recording. This enhanced recording (with spatial data overlays) may then be provided to end users through EUI.

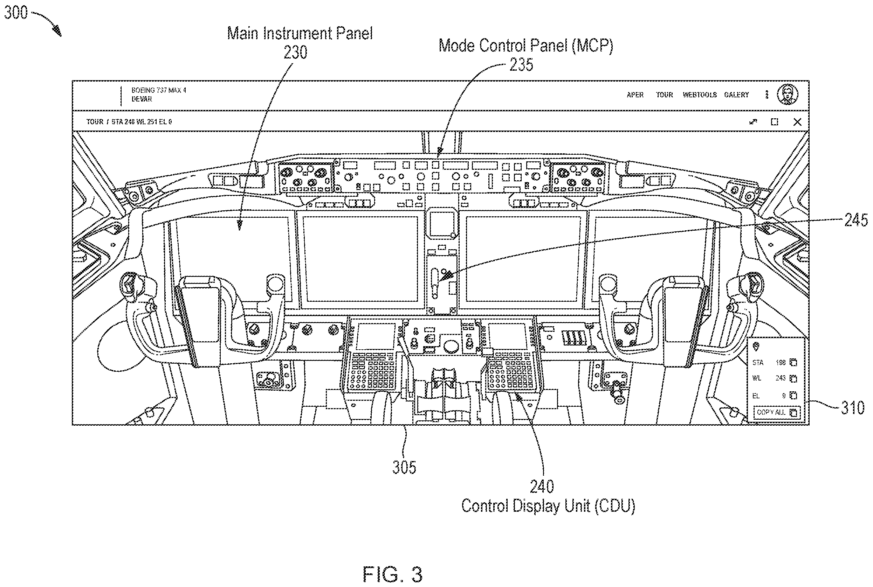

Figure 3 depicts an example of End User Interface (EUI) 300, according to some aspects of the present disclosure.

The illustrated figure shows a web-based EUI 300 that includes a photographic recording window 305 as its main feature. The photographic recording window 305 displays an enhanced photographic recording that depicts a specific area or assembly within a vehicle, such as a flight control deck within an aircraft cockpit. At the right bottom corner of the EUI 300 is a location display window 310. This window 310 dynamically shows the 3D coordinates (e.g., X, Y, Z; or STA, WL, BL) of any point or component within the recording when selected. For example, to identify the location of the main instrument panel 230 within the aircraft, the user can simply click any point (or pixel) of the panel within the photographic recording window 305, and the 3D coordinates of the clicked point (relative to the vehicle's local coordinate system) are displayed within the location display window 310. In some aspects, the functionality may also extend to the sub-components within each panel. For example, if the user wants to determine the location of the switch 245 within the main instrument panel 230, he or she can click on the point (or pixel) representing the switch 245 in the photographic recording. The EUI responds by automatically displaying the 3D coordinates of the switch 245 in the location display window 310. The interactive capacity of the EUI 300 may facilitate quick and efficient access to detailed location data. Through the EUI, inspectors or maintenance personnel can rapidly locate a specific component (e.g., the main instrument panel 230) or sub-component (e.g., the switch 245) within the aircraft using its 3D coordinates. This approach is more efficient than the conventional method that requires manual searches and referencing various technical documents in order to estimate the location of a component. By providing precise and directly accessible location data, the EUI 300 streamlines the location estimation process, and/or enhances the efficiency and accuracy of maintenance and inspection procedures.

Although the illustrated examples show the PCI 200 and EUI 300 are web-based, the examples are only provided for conceptual clarity. In some aspects, the PCI 200 or EUI 300 may be application-based, accessible by an application installed on the administrator device (e.g., 145 of Figure 1), or any other suitable formats depending on the specific requirements and user preferences.

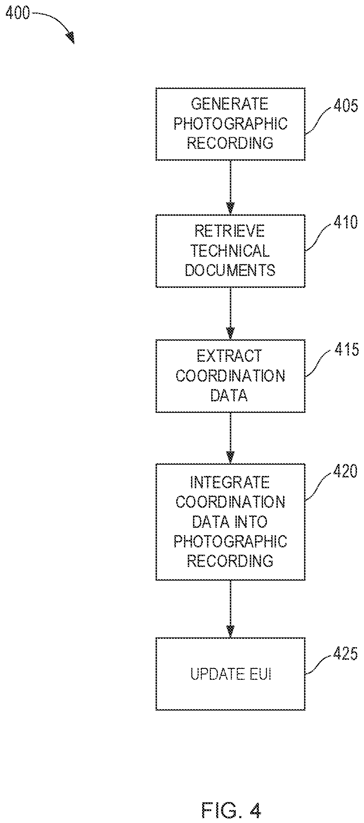

Figure 4 depicts an example method 400 for updating photographic recordings with extracted spatial data, according to some aspects of the present disclosure. In some aspects, the method 400 may be performed by one or more computing systems or devices, such as the backend server 105 as depicted in Figure 1.

The method 400 begins at block 405, where a computing system (e.g., the backend server 105 of Figure 1) generates a photographic recording for a vehicle (e.g., an aircraft). The recording may serve as a visual representation of a specific area within or outside of the vehicle (e.g., the cockpit within the aircraft), and/or capture one or more assemblies within that area (e.g., the flight control deck with multiple control panels or display units). As discussed above, the photographic recording may include two dimensional image(s) and/or a stitched image(s). For a 2D image, the process may involve using a camera strategically positioned within the vehicle (e.g., the cockpit of an aircraft), and taking a single image pointed towards the area of interest (e.g., the flight control deck). For a stitched images, the process may include capturing multiple images from various angles/positions around the vehicle's interior (e.g., the cockpit), and then stitching these individual images to create a 360-degree view of the entire space. The choice between a 2D image and a stitched image depends on the level of detail required and the spatial complexity of the area being recorded. In either case, the assemblies or instruments depicted within the resultant photographic recording (such as the control panels in the cockpit) are presented in a flat format-these images only capture the layout and appearance of these components without specific coordinate information.

At block 410, after the photographic recording has been generated, the computing system retrieves relevant technical documents from the database. These documents may include, but are not limited to, 3D models, engineering drawings, and installation guidelines. These documents may provide detailed information about the vehicle's components or assemblies (like the various control panels or display units within a flight control deck) as depicted within the recording. As discussed above, the materials may either provide a broad overview of the components' environment (e.g., 3D models depicting the overall cockpit), or specific details of the components in interest (e.g., detailed 3D models that specifically focus on the flight control deck).

At block 415, the computing system analyzes the technical documents to extract the coordinate data for the components or assemblies depicted in the recording. In some aspects, the process may involve using image recognition algorithms to identify reference points for each depicted component. In aspects where the recording shows a flight control deck with multiple control panels, such as a main instrument panel (e.g., 230 of Figure 2), a MCP (e.g., 235 of Figure 2), and a CDU (e.g., 240 of Figure 2), the layout or appearance of each panel may be defined by specific reference points. For example, a main instrument panel with a rectangular shape may be defined by the coordinates of its four corner points. The computing system may analyze the technical documents (e.g., 3D models, engineering drawings) to extract the 3D coordinates (e.g., X, Y, Z; or STA, WL, BL) of these reference points. In aspects where different documents utilize varying reference systems or units, the computing system may convert the extracted coordinates into a standardized format, to ensure consistency and accuracy in the coordinate data integration process.

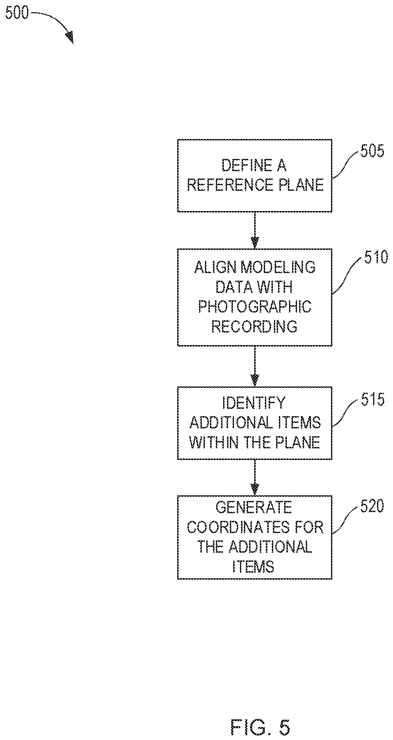

At block 420, the computing system integrates the extracted coordinate data into the photographic recording. The process may include overlaying the coordinate data on the 2D recording that depicts a vehicle's interior or exterior. In some aspects, the integration may transform the photographic recording into an interactive map that facilitates accurate and precise identification of the location of each depicted component (e.g., the main instrument panel 230 of Figure 2) and/or its various sub-components (e.g., the switch 245 located on the main instrument panel, as depicted in Figure 2). More detail about the integration process is discussed below with reference to Figure 5.

At block 425, the computer system updates the enhanced photographic recording with the coordinate data overlay in the EUI (e.g., 300 of Figure 3). Through the EUI, end users, such as inspectors or maintenance personnel, may interact with the recordings to obtain accurate location data of components and/or sub-components for efficient vehicle inspection and maintenance.

Figure 5 depicts an example method 500 for incorporating spatial data into photographic recordings and identifying component positions, according to some aspects of the present disclosure. In some aspects, the method 500 provides more details about the spatial data integration as depicted at block 420 of Figure 4. In some aspects, the method 500 may be performed by one or more computing systems or devices, such as the backend server 105 as depicted in Figure 1.

At block 505, a computing system (e.g., the backend server 105 of Figure 1) uses the extracted coordinate data to construct geometric planes (e.g., rectangular or polygonal) within the photographic recordings. For a component having a rectangular shape (such as the main instrument panel 230 as depicted in Figure 2), coordinates of four corner points may be used. For a component having a non-standard shape (e.g., the MCP 235 of Figure 2), the process may involve using more than four points (e.g., up to nine) to accurately draw the plane that accurately aligns with the component's shape. The computing system may connect these reference points to form the edges of the plane (e.g., rectangular or polygonal). Once the planes are defined, the computing system overlays the planes onto the photographic recording in a manner that aligns the planes within the visual representation of the components in the recording. In some aspects, the process of defining and overlaying planes within the recording may be an automated process, where the computing system automatically calculates and constructs the geometric planes based on the extracted coordinate data, and aligns them with corresponding components within the 2D space of the recording. In some aspects, the process may be performed manually by a developer through the PCI (e.g., 200 of Figure 2). In such configurations, the developer may manually input the coordinates of the reference points and overlay the planes onto the photographic recording.

At block 510, the computing system performs a validation process to check for discrepancies between the constructed planes and the actual visual representation of components or assemblies within the recording. The validation process allows the computing system to ensure that the size, shape, and position of the overlaid planes accurately match the corresponding components as they appear in the 2D image. If any discrepancies are detected, the computing system may trigger an alert, and/or flag these areas for further review. In some aspects, developers may review and fine-tune the planes via the PCI (e.g., 200 of Figure 2).

At block 515, the computing system identifies additional items or sub-components (e.g., switches, buttons) within the established planes. While technical documents, such as 3D models, provide comprehensive information, they may not always contain detailed coordinate data for each individual switch or button within a control panel (e.g., the switch 245 of Figure 2). The computing system may use image recognition algorithms to detect these sub-components, and determine their relative positions within the plane. In some aspects, the relative positions may be determined by defining a sub-coordinate system within each plane (with X and Y axes). The sub-coordinate system may serve as a reference for mapping the positions of sub-components. For example, within a plane (e.g., 220-1 of Figure 2) representing the main instrument panel (e.g., 230 of Figure 2), a switch (e.g., 245 of Figure 2) is assigned X and Y coordinates relative to the plane's origin, which is one of the plane's reference points.

At block 520, following the identification of sub-components and their relative positions within the defined planes, the computing system then utilizes the known 3D coordinates of the plane's reference points to calculate the full 3D coordinates for each sub-component (which may not be explicitly detailed in existing technical documents). The full 3D coordinate data for each sub-component may then be integrated into the photographic recording, which enables end users, via the EUI (e.g., 300 of Figure 3), to quickly and accurately identify the location of a sub-component within the vehicle, even if the data is not explicitly disclosed in existing technical documents.

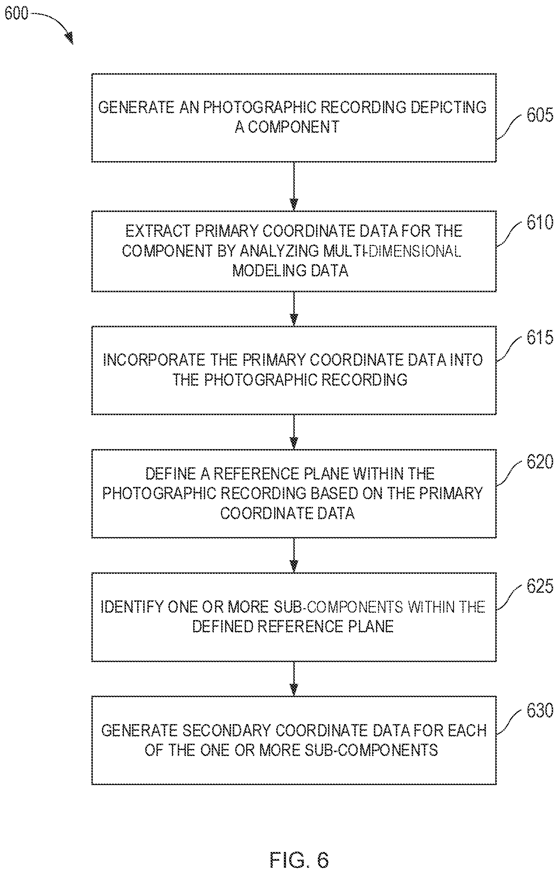

Figure 6 is a flow diagram depicting an example method 600 for coordinate extraction and integration, according to some aspects of the present disclosure.

At block 605, a computing system (e.g., the backend server 105 of Figure 1) generates a photographic recording depicting a component (e.g., the main instrument panel 230 of Figure 2).

At block 610, the computing system extracts primary coordinate data for the component by analyzing one or more technical documents (as depicted by blocks 410 and 415 of Figure 4). In some aspects, the one or more technical documents may comprise at least one of one or more three-dimensional (3D) models of a vehicle, one or more detailed 3D models focusing on the component on the vehicle, one or more engineering drawings related to the component or the vehicle, or one or more installation documents related to the component or the vehicle.

At block 615, the computing system integrates the primary coordinate data into the photographic recording (as depicted by block 420 of Figure 4). The integration comprises three steps, as discussed below with reference to blocks 620, 625 and 630. In some aspects, the integration may be performed via a Polygon Coordinate Interface (PCI).

At block 620, the computing system defines a reference plane (e.g., 220-1 of Figure 2) within the photographic recording based on the primary coordinate data (as depicted by block 505 of Figure 5). In some aspects, the process of defining the reference plane within the photographic recording may comprise determining a set of points (e.g., 215 of Figure 2) depicting the component in the photographic recording, and labeling the set of points based on the primary coordinate data. In some aspects, the set of points depicting the component in the photographic recording may be determined using image recognition algorithms.

At block 625, the computing system identifies one or more sub-components (e.g., the switch 245 of Figure 2) within the defined plane (e.g., 220-1 of Figure 2).

At block 630, the computing system generates secondary coordinate data for each of the one or more sub-components (as depicted by block 520 of Figure 5). In some aspects, the secondary coordinate data may comprise coordinates for each of the one or more sub-components.

In some aspects, the integration further comprises executing a validation process to verify that the defined plane correctly aligns with visual features of the component depicted by the photographic recording (as depicted by block 510 of Figure 5).

In some aspects, responsive to integrating the primary coordinate data into the photographic recording, the computing system may further provide the photographic recording, enhanced with the primary and secondary coordinate data for user interaction.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to aspects of the present disclosure, other and further aspects of the disclosure may be devised without departing from the basic scope thereof, and the scope thereof is determined by the claims that follow.

Further examples and combinations thereof include the following:
Clause 1. A method comprising:
   generating a photographic recording depicting a component (235);
   extracting primary coordinate data (215) for the component by analyzing one or more technical documents; and
   integrating the primary coordinate data (215) into the photographic recording, comprising:
      defining a reference plane (220) within the photographic recording based on the primary coordinate data,
      identifying one or more sub-components (245) within the defined reference plane, and
      generating secondary coordinate data for each of the one or more sub-components.
Clause 2. The method of Clause 1, wherein integrating the primary coordinate data into the photographic recording further comprises executing a validation process to verify that the defined reference plane (220) correctly aligns with visual features of the component (235) depicted by the photographic recording.
Clause 3. The method of Clause 1, wherein defining the reference plane within the photographic recording comprises:
   determining a set of points depicting the component in the photographic recording, and
   labeling the set of points based on the primary coordinate data.
Clause 4. The method of Clause 3, wherein the set of points depicting the component in the photographic recording are determined using image recognition algorithms.
Clause 5. The method of Clause 1, wherein the one or more technical documents comprises at least one of one or more three-dimensional (3D) models of a vehicle, one or more detailed 3D models focusing on the component on the vehicle, one or more engineering drawings related to the component or the vehicle, or one or more installation documents related to the component or the vehicle.
Clause 6. The method of Clause 1, wherein the secondary coordinate data comprises coordinates for each of the one or more sub-components (245).
Clause 7. The method of Clause 1, further comprising, responsive to integrating the primary coordinate data into the photographic recording, providing the photographic recording, enhanced with the primary and secondary coordinate data, for user interaction.
Clause 8. A system (105) comprising:
   a Polygon Coordinate Interface (PCI) (130);
   a End User Interface (EUI) (135);
   one or more computer processors (110); and
   one or more memories (115) collectively containing one or more programs, which, when executed by the one or more computer processors, perform operations, the operations comprising:
      generating a photographic recording depicting a component (235);
      extracting primary coordinate data (215) for the component by analyzing one or more technical documents; and
      integrating the primary coordinate data (215) into the photographic recording, comprising:
         defining a reference plane (220) within the photographic recording based on the primary coordinate data,
         identifying one or more sub-components (245) within the defined reference plane, and
         generating secondary coordinate data for each of the one or more sub-components.
Clause 9. The system of Clause 8, wherein, to incorporate the primary coordinate data into the photographic recording, the one or more programs, which, when executed on any combination of the one or more computer processors (110), perform the operations further comprising executing a validation process to verify that the defined reference plane (220) correctly aligns with visual features of the component (235) depicted by the photographic recording.
Clause 10. The system of Clause 8, wherein, to define the reference plane within the photographic recording, the one or more programs, which, when executed on any combination of the one or more computer processors (110), perform the operations comprising:
   determining a set of points depicting the component in the photographic recording, and
   labeling the set of points based on the primary coordinate data.
Clause 11. The system of Clause 10, wherein the set of points depicting the component in the photographic recording are determined using image recognition algorithms.
Clause 12. The system of Clause 8, wherein the one or more technical documents comprises at least one of one or more three-dimensional (3D) models of a vehicle, one or more detailed 3D models focusing on the component on the vehicle, one or more engineering drawings related to the component or the vehicle, or one or more installation documents related to the component or the vehicle.
Clause 13. The system of Clause 8, wherein the secondary coordinate data comprises coordinates for each of the one or more sub-components (245).
Clause 14. The system of Clause 8, wherein the one or more programs, which, when executed on any combination of the one or more computer processors, perform the operations further comprising, responsive to integrating the primary coordinate data into the photographic recording, providing the photographic recording, enhanced with the primary and secondary coordinate data, for user interaction.
Clause 15. One or more non-transitory computer-readable media containing, in any combination, computer program code that, when executed by a computer system (105), performs operations comprising:
   generating a photographic recording depicting a component (235);
   extracting primary coordinate data (215) for the component by analyzing one or more technical documents; and
   integrating the primary coordinate data (215) into the photographic recording, comprising:
      defining a reference plane (220) within the photographic recording based on the primary coordinate data,
      identifying one or more sub-components (245) within the defined reference plane, and
      generating secondary coordinate data for each of the one or more sub-components.
Clause 16. The one or more non-transitory computer-readable media of Clause 15, wherein, to incorporate the primary coordinate data into the photographic recording, the computer program code, which, when executed by a computer system, performs the operations further comprising executing a validation process to verify that the defined reference plane (220) correctly aligns with visual features of the component (235) depicted by the photographic recording.
Clause 17. The one or more non-transitory computer-readable media of Clause 18, wherein, to define the reference plane within the photographic recording, the computer program code, which, when executed by a computer system, performs the operations comprising:
   determining a set of points depicting the component in the photographic recording, and
   labeling the set of points based on the primary coordinate data.
Clause 18. The one or more non-transitory computer-readable media of Clause 17, wherein the set of points depicting the component in the photographic recording are determined using image recognition algorithms.
Clause 19. The one or more non-transitory computer-readable media of Clause 16, wherein the one or more technical documents comprises at least one of one or more three-dimensional (3D) models of a vehicle, one or more detailed 3D models focusing on the component on the vehicle, one or more engineering drawings related to the component or the vehicle, or one or more installation documents related to the component or the vehicle.
Clause 20. The one or more non-transitory computer-readable media of Clause 16, wherein the computer program code, which, when executed by a computer system, performs the operations further comprising, responsive to integrating the primary coordinate data into the photographic recording, providing the photographic recording, enhanced with the primary and secondary coordinate data, for user interaction.

## Claims

1. A computer-implemented method (400, 500; 600) comprising:
generating a photographic recording depicting a component (405; 605);
extracting primary coordinate data for the component by analyzing one or more technical documents (410, 415; 610); and
integrating the primary coordinate data into the photographic recording (420; 615), comprising:
defining a reference plane within the photographic recording (505; 620) based on the primary coordinate data,
identifying one or more sub-components within the defined reference plane (515; 625), and
generating secondary coordinate data for each of the one or more sub-components (520; 630).

2. The method (400, 500; 600) of claim 1, wherein integrating the primary coordinate data into the photographic recording (420; 615) further comprises executing a validation process to verify that the defined reference plane correctly aligns with visual features of the component depicted by the photographic recording (510).

3. The method (400, 500; 600) of claim 1 or 2, wherein defining the reference plane within the photographic recording (505; 620) comprises:
determining a set of points depicting the component in the photographic recording, and
labeling the set of points based on the primary coordinate data.

4. The method (400, 500; 600) of claim 3, wherein the set of points depicting the component in the photographic recording are determined using image recognition algorithms.

5. The method (400, 500; 600) of any one of the preceding claims, wherein the one or more technical documents comprises at least one of one or more three-dimensional, 3D, models of a vehicle, one or more detailed 3D models focusing on the component on the vehicle, one or more engineering drawings related to the component or the vehicle, or one or more installation documents related to the component or the vehicle.

6. The method (400, 500; 600) of any one of the preceding claims, wherein the secondary coordinate data comprises coordinates for each of the one or more sub-components.

7. The method (400, 500; 600) of any one of the preceding claims, further comprising, responsive to integrating the primary coordinate data into the photographic recording (420; 615), providing the photographic recording, enhanced with the primary and secondary coordinate data, for user interaction.

8. The method (400, 500; 600) of claim 7, wherein the enhanced photographic recording is made available to end users through an End User Interface, EUI.

9. The method (400, 500; 600) of claim 8, wherein integrating the primary coordinate data into the photographic recording (420; 615) includes overlaying the coordinate data on a 2D recording that depicts a vehicle's interior or exterior.

10. The method (400, 500; 600) of claim 9, further comprising updating the enhanced photographic recording with the coordinate data overlay in the EUI (425).

11. The method (400, 500; 600) of claim 2, further comprising triggering an alert and/or a flag areas in response to detecting discrepancies found during the validation process.

12. A system (100) comprising:
a Polygon Coordinate Interface, PCI, (130);
a End User Interface, EUI, (135);
one or more computer processors (110); and
one or more memories (115) collectively containing one or more programs, which, when executed by the one or more computer processors (115), performthe method (400, 500) according to any one of the preceding claims.

13. The system (100) of claim 12, further comprising:
a backend server (105) including the PCI (130), the EUI (135), the one or more computer processors (110) and the one or more memories (115), said backend server (105) futher including a storage (120) and one or more network interfaces (140) all connected through an interconnect bus (125);
a database (155);
an administrator device (145), said PCI (130) being accessible through the administrator device (145);
an end-user device (150), said EUI (135) being accessible through the end-user device (150).

14. The system (100) of claim 11 or 12, wherein the PCI (130) is designed as a web-based platform accessible thorugh a web browser or part of an application (165) installed on the administrator device (145), and the EUI (135) is designed as a web-based platform accessible thorugh a web broweser or part of an application (175) within the end-user device (150).

15. One or more non-transitory computer-readable media containing, in any combination, computer program code that, when executed by a computer system (105), performs the method according to any one of the preceding claims.
